# EUROPEAN PATENT SPECIFICATION

(11) **EP 1 242 251 B1**
(45) Date of publication and mention of the grant of the patent: **25.06.2003**
(21) Application number: 99963077.5
(22) Date of filing: 14.12.1999
(51) Int. Cl.: B60C 3/04, B60C 11/00, B60C 11/01, B60C 9/18, B60C 15/00, B60C 15/06, B60C 9/20

(54) **TIRE DESIGN BASED ON FIRST PRINCIPLES OF STRUCTURAL ENGINEERING**
REIFEN-ENTWURF AUF BASIS DER PRINZIPIEN DER INGENIEURTECHNIK
MODELE DE PNEUMATIQUE CONN U SELON LES PRINCIPES DE BASE DE L'INGENIERIE STRUCTURALE

(43) Date of publication of application: 25.09.2002
(73) Proprietor: THE GOODYEAR TIRE & RUBBER COMPANY, Akron, Ohio 44316-0001 (US)
(72) Inventor: RIDHA, Raouf, Abdul, Sharon Center, OH 44274 (US)
(74) Representative: Leitz, Paul
(86) International application number: US9929526
(87) International publication number: WO01043992

(56) References cited:
- FR-A- 1 059 542
- US-A- 4 513 802
- US-A- 4 762 158
- US-E- R E30 549
- PATENT ABSTRACTS OF JAPAN vol. 010, no. 151 (M-483), 31 May 1986 (1986-05-31) & JP 61 006004 A (BRIDGESTONE KK), 11 January 1986 (1986-01-11)

## Description

### Technical Field

The invention relates to a tire and to a method for designing such tire.

### Background Art

In prior art bias ply tires, the opposed angles of the reinforcement cords in adjacent carcass plies in the tire caused the carcass plies to work against each other, and this construction caused the bias ply tire to act as a unit. That is, stresses encountered by the tire while rolling on a vehicle were distributed throughout the tire. The breaker package in the tire provided a constraint to stiffen the tire and reduce its deformation, and provided a base for a flattened tread against the road.

With the advent of the radial ply tire, the high angles of the reinforcement cords in the carcass plies, relative to the equatorial plane (EP) of the tire, reduced the interaction between the carcass plies and increased the flexibility of the sidewalls. The increased flexibility in the sidewalls reduced stresses on the crown and tread area of the tire since most of the energy absorbed by the tire while running on a vehicle was absorbed by the sidewalls.

Moriyama in U.S. Patent 5,746,860, teaches a low-section profile pneumatic radial tire which is manufactured by using a green tire built in a first and a second building steps, wherein an uncured inner sidewall rubber segment and an uncured outer sidewall rubber segment are separately provided to correspond to an inner portion and an outer portion, and parted from each sidewall rubber of a tire, after vulcanization. The components are provided in a radial direction in the tire, providing a parting face located on an outer surface of the sidewall rubber which is not more than one half of a section height of the tire. The uncured inner sidewall rubber segment is attached in the first building step, and the uncured outer sidewall rubber segment is attached at the second building step. This construction is said to provide a tire which has excellent resistance to cracking in the sidewall portion without degrading tire performance.

Morel, in International Publication WO 99/42307, teaches a tire with a body ply reinforcement (1), a top ply reinforcement (3), and a tire tread (4) joined to two tire beads via two sidewalls (5). The axially outer edges of the tire tread are folded down over the radially outer ends of the sidewalls. A secular joint (J) between the tread and the sidewall is positioned such that its radius (R C) on the tire (P) axially outer wall ranges between 0.9 RS plus 0.1 RB and 0.8 RS plus 0.2 RB, and between RSS and 0.9 RSS plus 0.1 RB, where RS is the tire tread equatorial radius and RSS is the body ply mean line equatorial radius, and RB is the tire bead seat.

US RE30549 E discloses a pneumatic tire as recited in the preamble of claim 1, the cord reinforcement of the belt being oriented at an angle between 15° and 30°.

US-A- 4 762 158 discloses a radial carcass tire having a low rolling resistance obtained by modifying the contour of the radial surface of the carcass.

It is an object of the invention to provide a tire having improved overall wear, handling, rolling resistance and traction properties.

### Summary of the Invention

The invention provides a pneumatic tire and a method of constructing a pneumatic tire as defined in the appended claims.

### Definitions

"Apex" refers to a wedge of rubber placed between the carcass and the carcass turnup in the bead area of the tire, usually used to stiffen the lower sidewall of the tire.

"Axial" and "axially" means lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt reinforcing structure" means at least two layers of plies of parallel cords, woven or unwoven, underlying the tread, unanchored to the bead, and having both left and right cord angles in the range from 17 degrees to 27 degrees with respect to the equatorial plane of the tire.

"Bias ply tire" means a tire having a carcass with reinforcing cords in the carcass ply extending diagonally across the tire from bead core to bead core at a 25 to 50 degree angle with respect to the equatorial plane of the tire. Cords run at opposite angles in alternate layers.

"Breakers" refers to at least two annular layers or plies of parallel reinforcement cords having the same angle with reference to the equatorial plane of the tire as the parallel reinforcing cords in carcass plies.

"Carcass ply" means the tire structure apart from the belt structure, tread, undertread, sidewall rubber and the beads.

"Chafers" refers to narrow strips of material placed around the outside of the bead to protect cord plies from the rim, distribute flexing above the rim, and to seal the tire.

"Cord" means one of the reinforcement strands of which the plies in the tire are comprised.

"Design rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization - Standards Manual and the term design rim means the same as the standard measurement rims. In Japan, the standard organization is The Japan Automobile Tire Manufacturer's Association.

"Design rim width" is the specific commercially available rim width assigned to each tire size and typically is between 75 and 90% of the specific tire's section width.

"Equatorial plane (EP)" means the plane perpendicular to the tire's axis of rotation and passing through the center of its tread.

"Filament" refers to a single yarn.

"Footprint" means the contact patch or area of contact of the tire tread with a flat surface at zero speed and under normal load and pressure.

"Innerliner" means the layer or layers of elastomer or other material that form the inside surface of a tubeless tire and that contain the inflating fluid within the tire.

"Lateral edge" means the axially outermost edge of the tread as defined by a plane parallel to the equatorial plane and intersecting the outer ends of the axially outermost traction lugs at the radial height of the inner tread surface.

"Leading" refers to a portion or part of the tread that contacts the ground first, with respect to a series of such parts or portions, during rotation of the tire in the direction of travel.

"Molded base width" refers to the distance between the beads of the tire in the curing mold. The cured tire, after removal from the curing mold will substantially retain its molded shape, and "molded base width" may also refer to the distance between the beads in an unmounted, cured tire.

"Net contact area" means the total area of ground contacting tread elements between the lateral edges.

"Nominal rim diameter" means the average diameter of the rim flange at the location where the bead portion of the tire seats.

"Normal inflation pressure" refers to the specific design inflation pressure and load assigned by the appropriate standards organization for the service condition for the tire.

"Normal load" refers to the specific design inflation pressure and load assigned by the appropriate standards organization for the service condition for the tire.

"Pantographing" refers to the shifting of the angles of cord reinforcement in a tire when the diameter of the tire changes, e.g. during the expansion of the tire in the mold.

"Ply" means a continuous layer of rubber-coated parallel cords.

"Pneumatic tire" means a mechanical device of generally toroidal shape (usually an open torus) having beads and a tread and made of rubber, chemicals, fabric and steel or other materials. When mounted on the wheel of a motor vehicle, the tire through its tread provides a traction and contains the fluid or gaseous matter, usually air, that sustains the vehicle load.

"Radial" and "radially" means directions radially toward or away from the axis of rotation of the tire.

"Radial-ply tire" means a belted or circumferentially restricted pneumatic tire in which the ply cords which extend from bead to bead are laid at cord angles between 65 to 90 degrees with respect to the equatorial plane of the tire.

"Rhoₘ" refers to the perpendicular distance from the axis of rotation of a tire to a line parallel to the axis of rotation which passes through the maximum section width of the tire, as described by Purdy, "Mathematics Underlying the Design of Pneumatic Tires.", Hiney Printing Co., Akron, Ohio (1963).

"Section height" (SH) means the radial distance from the nominal rim diameter to the outer diameter of the tire at its equatorial plane.

"Section width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of a sidewall just below the tread edge.

"Sidewall" means that portion of a tire between the tread and the bead.

"Splice" refers to the connection of end of two components, or the two ends of the same component in a tire. "Splice" may refer to the abutment or the overlapping of two such ends.

"Strain energy density" refers to the summation of the product of the six stress components (three normal stresses and three shear stresses) and their corresponding strains.

"Tire design load" is the base or reference load assigned to a tire at a specific inflation pressure and service condition: other load-pressure relationships applicable to the tire are based upon that base or reference.

"Tread" means a molded rubber component which, when bonded to a tire casing, includes that portion of the tire which comes into contact with the road when the tire is normally inflated and under normal load.

"Tread arc width" (TAW) means the width of an arc having its center located on the plane (EP) and which substantially coincides with the radially outermost surfaces of the various traction elements (lugs, blocks, buttons, ribs, etc.) across the lateral or axial width of the tread portions of a tire when the tire is mounted upon its designated rim and inflated to its specified inflation pressure but not subjected to any load.

"Tread width" means the arc length of the tread surface in the axial direction, that is, in a plane passing through the axis of rotation of the tire.

"Unit tread pressure" means the radial load borne per unit area (square centimeter or square inch) of the tread surface when that area is in the footprint of the normally inflated and normally loaded tire.

"Wedge" refers to a tapered rubber insert, usually used to define individual curvature of a reinforcing component, e.g. at a belt edge.

### Brief Description of Drawings

Fig. 1 illustrates the tire made using the method of the invention.
Fig. 2 illustrates schematically the structural components of a tire made using the method of the invention.
Fig. 3 illustrates superimposed views of the mold shape and the mounted shape of the tire of the invention.
Fig. 3a illustrates stresses observed on a mounted tire, under load, superimposed with its original mold shape.
Fig. 3b illustrates the concept of the invention using relative dimensions within a truck tire construction.
Fig. 4 illustrates the shape of a prior art tire.
Fig. 5 illustrates superimposed views of the mold shape and the mounted shape of a prior art tire.

### Detailed Description of the Invention

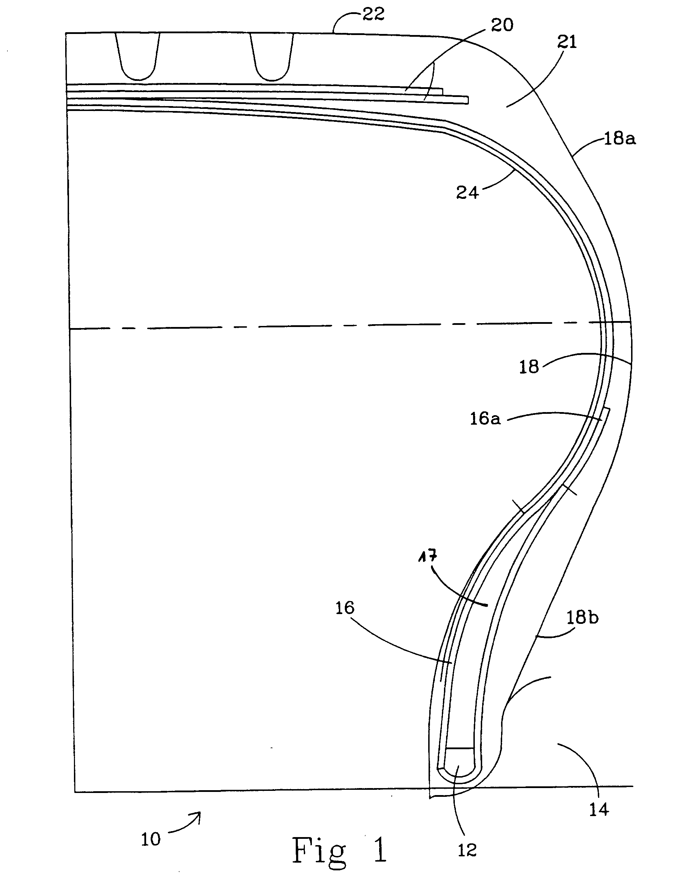

With reference now to Fig. 1, a tire 10 of the invention comprises at least a pair of annular beads 12 around which is wrapped at least one carcass ply 16. Belts 20, in the crown area of the tire, restrain the carcass ply and reinforce the crown area of the tire. Tread 22 is disposed over belts 20. Sidewalls 18 are disposed between the tread 22 and the beads 12. Sidewalls 18 comprise an upper sidewall 18a, which has a convex shape, and a lower sidewall 18b, which has a concave shape. The tire 10 is illustrated as being mounted on a rim 14.

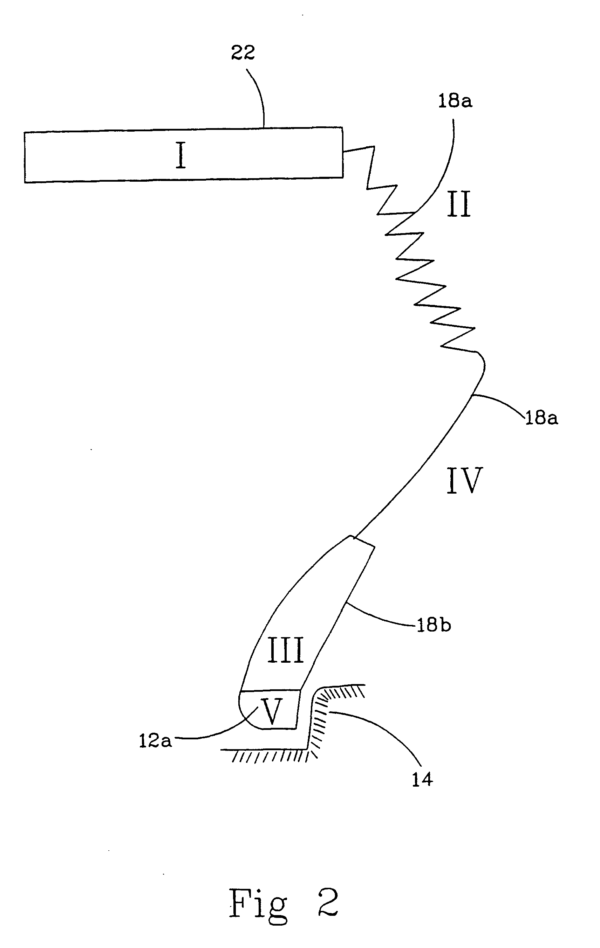

With reference now to Fig. 2, the tire of the invention is constructed such that lower sidewall 18b is highly reinforced, and is made with stiff compounds such that lower sidewall 18b is rigid and acts together with bead portion 12a to form a supporting substructure with a specified shape. Bead portion 12a and lower sidewall 18b act together when stresses act against lower sidewall 18b such that rim 14 acts as a pivot point for the movement of both bead portion 12a and lower sidewall portion 18b when the tire is subjected to stress.

Lower sidewall portion 18b has an apex 17 made of a stiff rubber having a modulus of 4760 Newtons per square centimeter (Npscm) to 6460 Npscm (7000 psi to 9500 psi) and a shape defined on one side by the ply line in the lower sidewall 18b, and on the opposite side by concave curve having a curvature equal to 0.5-0.8 times the curvature of the ply line in the lower sidewall 18b. In the illustrated embodiment, the apex 17 has a length which comprises 35% to 45 % of the section height (SH) of the tire, and is covered by turnup portion 16a of carcass ply 16, which comprises at least 40%, but not more than 60% of the section height of the tire. Finally, chafer 19, which may be made of high modulus elastomer, and sidewall rubber 15, having a shape defined by a substantially flat exterior profile, sandwiches apex 17, carcass turnup 16a and the bead, to ensure that lower sidewall portion 18b acts, in the dynamics of the tire, as an isolated, single tire component.

Upper sidewall 18a is made flexible, so that it absorbs stresses encountered by tread 22, permitting tread 22 to remain substantially flat across the full tread width. Sidewall portion 18c is less flexible than sidewall portion 18a, and less rigid than sidewall portion 18b and provides a transition between the rigidity of sidewall portion 18b and the flexibility of sidewall portion 18a.

Tread 22 is made with an increased axial stiffness, and is further supported laterally by an extended wedge supporting the edges of belts 20, and a laterally stiffened belt reinforcement. The belt and tread accordingly act as a beam in the tire, which enhances the transfer of energy from the tread 22 to upper sidewall portion 18a of the tire.

With reference again to Fig. 1, belts 20 have an extended width comprising 82% to 92% of the section width (SW) of the tire, as compared to most conventional tires that have a belt width that comprises 70% to 80% of the SW of the tire, which helps improve the rigidity of tread 22. A wedge of rubber 21 is provided under the edges of belt 20 to help maintain the rigidity of tread 22. The wedge 21 is preferably made as an integrated, molded portion of sidewall 18. The wedge is an extended length wedge, that is the portion of wedge 21 that is contiguous with belts 20, has a length that corresponds to 37% to 43% of the belt width. Wedge 21 has a height that substantially removes all curvature from the belt at the belt edge.

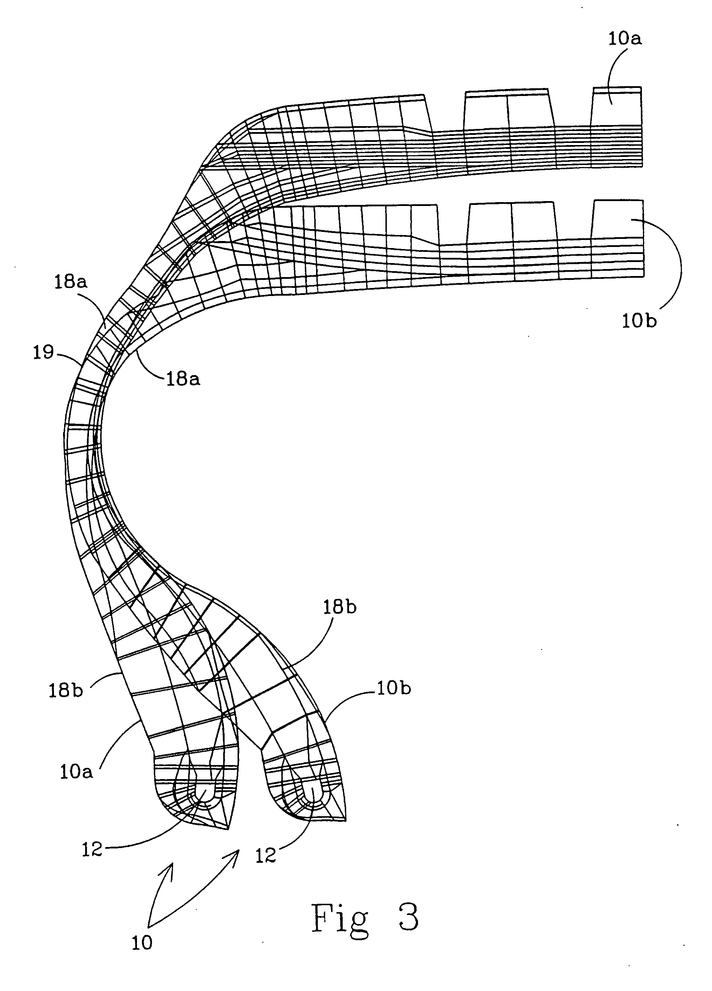

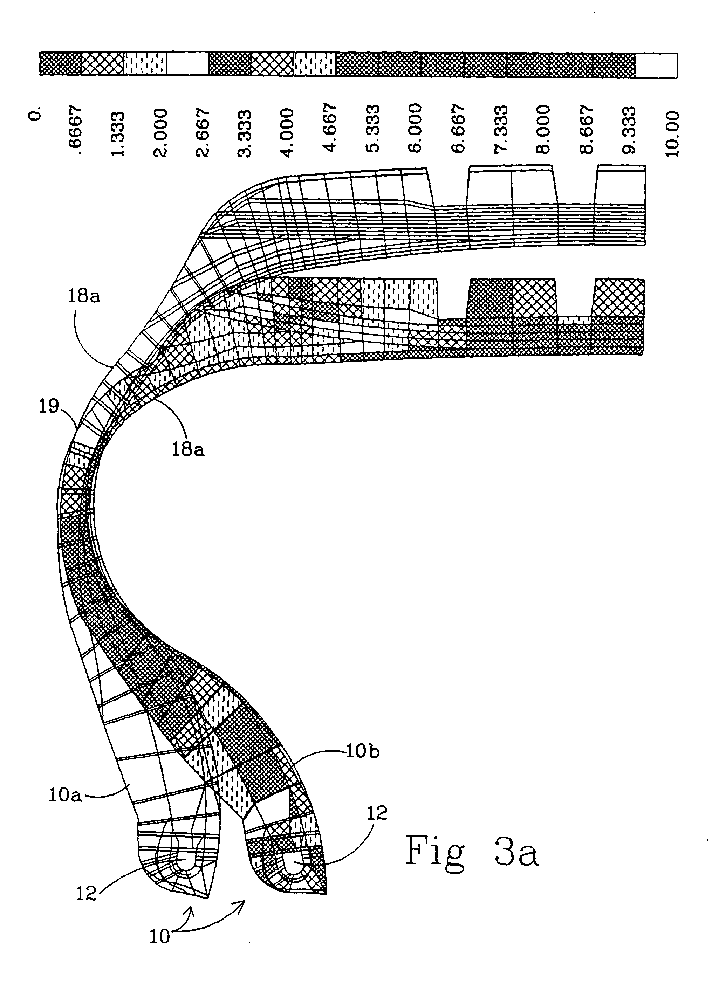

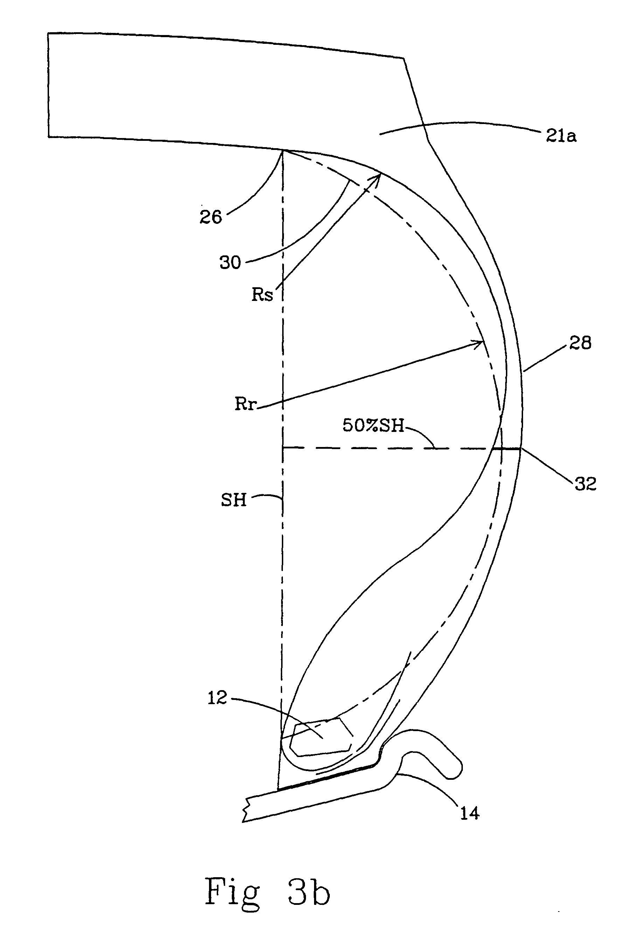

When a tire is made, the tire components are laid up to produce a green tire, and the green tire is cured in a mold. The shape of a curing mold determines the cured shape of a tire. With reference now to Fig. 3, in the method of the invention, wherein it is an object to pre-stress a tire when it is mounted on its design rim, it is desired to produce a tire having a molded shape 10a wherein the distance between beads 12 on opposed sides of the tire is wider than the distance between beads 12 of the tire mounted shape 10b when the tire is mounted on design rim 14, i.e., the distance between the bead seats in the mold is greater than the distance between the bead seats on the rim. Fig. 3 illustrates superimposed views of the molded shape 10a of a tire, and its shape 10b when it is mounted on its rim and subjected to a normal load.

By pre-stress it is meant that stress is applied to parts of the tire simply by the act of mounting the tire on a rim. In the conception of the invention, the inventors theorized that prestressing would provide more strength and durability to the tire, in much the same way that concrete is able to withstand greater impact when pre-stressed. The pre-stresses act to counter some of the stresses resulting from subsequent tire loads due to inflation and footprint load.

When a tire 10 having a mold shape 10a is mounted on a rim 14, because of the rigidity of lower sidewall 18b, and the flexibility of upper sidewall 18a, the bead and lower sidewall 18b move in unison to accommodate the narrower rim width, and the sidewall pivots at a point 19 which is located in the area of upper sidewall 18a. See Fig. 3b.

It is believed that the establishment of pivot point 19 when the tire is mounted, further predisposes the tire sidewall to flex at this point, and helps provide a decoupling between the tread 22 and upper sidewall portion 18a.

The structure of tire 10 makes it possible for tread 22 to maintain flatter contact with a road surface than is possible in prior art tires. Flatter contact with the road means that the footprint of the tire will remain substantially constant while the tire rotates, and therefore will maintain a maximum possible net contact area at all times. Also, since the tread does not distort laterally as the tire rotates, the tread does not work as much (i.e. there is less slipping and crawling), and the traction properties, wear properties and rolling resistance properties should all be improved.

With reference now to Fig. 3a, stresses in the pre-loaded tire are illustrated. The shaded areas in the tire represent the areas of greatest stress. As can be seen in Fig. 3, the tire construction causes the stresses in the tire to be directed to the mid to lower sidewall, the concave portion of the lower sidewall, and the middle of the tread. In the tire of the invention, these areas of the tire carry most of the load for the tire, and are involved in causing the tire to respond when steering.

With reference now to Fig. 3b, a tire of the invention is constructed having specific relationships between the shoulder point 26, a point 32 of the sidewall which corresponds to 50% of the section height of the tire, and the bead 12. This concept is illustrated using a truck tire construction, but is generally applicable to other kinds of tires. As is illustrated in Fig. 3b, a reference circle 30 can be drawn which contains shoulder point 26, 50% of the section height 32, and bead 12. In the illustrated embodiment, the rhoₘ 28 of the tire, i.e., the widest point on the ply line of the tire, is designed to be greater than 50% of the section height 32. In the illustrated embodiment a rhoₘ of 7.7 cm (3.03 inches) was selected, which corresponds to 60% of the section height. The radius Rᵣ of the reference circle 30 was chosen to be 6.22 cm (2.45 inches). The shoulder radius Rₛ of the ply line was chosen to be smaller than Rᵣ. When Rₛ is smaller than Rᵣ, this defines a convex profile which is believed to induce flexural deformation and reduce shear deformations. It is believed that Rₛ that is 40% to 70% of Rᵣ will function in the invention, and in the illustrated embodiment, Rₛ was chosen to be about 55% of Rᵣ, which is 3.43 cm (1.35 inches).

By contrast, lower sidewall portion 18b is designed to have a concave profile, which is believed to better carry loads that are transferred from the footprint to the lower sidewalls. The rigidity of tread 22, the flexibility of upper sidewall portion 18a, the convex shape of upper sidewall portion 18a, and the position of rhoₘ all work together to transfer these loads to lower sidewall portion 18b.

The concave shape also assures avoidance of stress reversal as a segment of the tire moves in and out of the footprint. Such stress reversal is detrimental to the durability of rubber and cord/rubber interfaces in a composite.

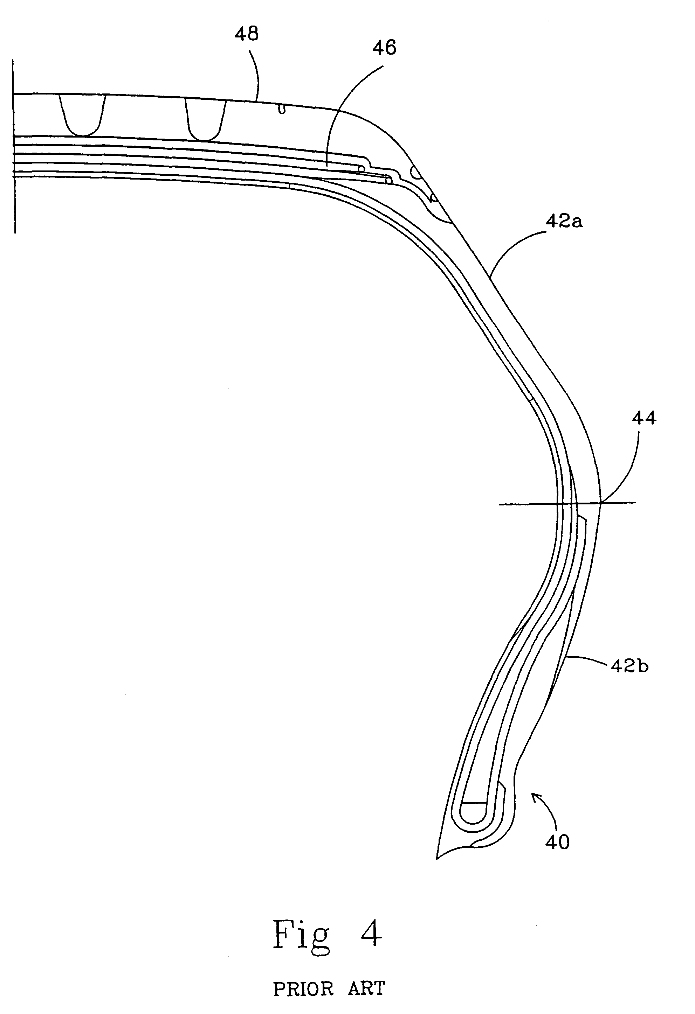

With reference now to Fig. 4, the mold shape of a prior art tire 40 is illustrated. Tire 40 is the control tire referred to in the examples. In the prior art tire, upper sidewall portion 42a and lower sidewall portion 42b have a shape that can be defined as being substantially straight. The widest point 44 in the tire sidewall corresponds substantially with 50% of the section height of the tire. Belts 46 are somewhat curved in the shoulder area of the tire since the wedge is not long enough to ensure a complete flattening of the belt.

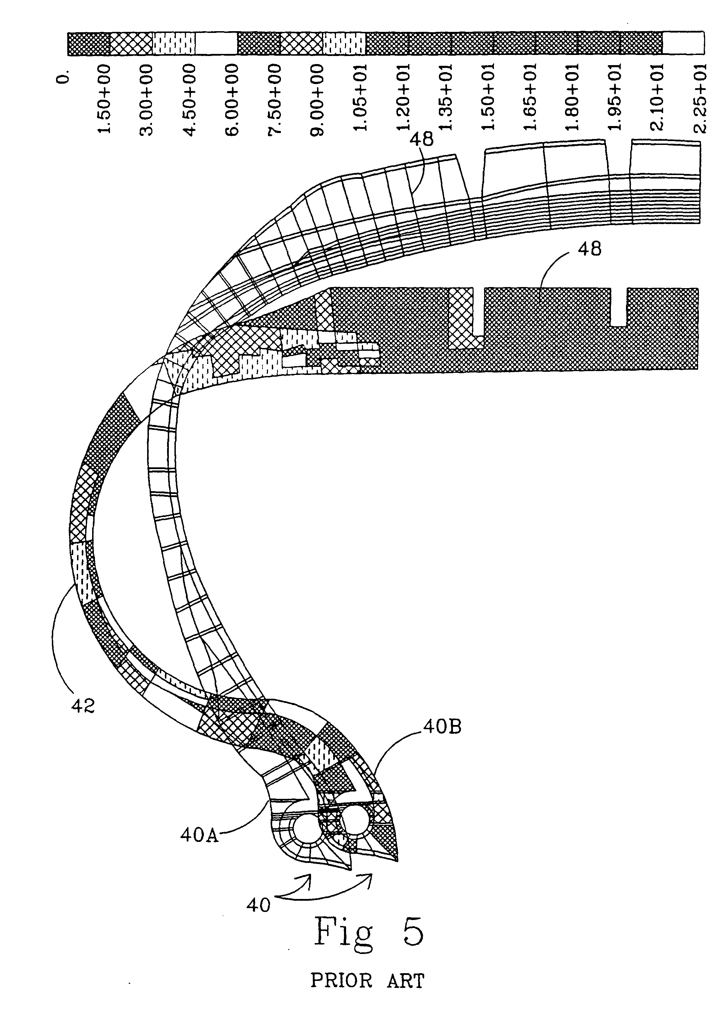

With reference now to Fig. 5, the mold shape 40a of tire 40 is substantially the same as the mounted shape 40b of the tire. Accordingly, sidewall 42 undergoes a substantially uniform distortion throughout its length when the tire is mounted on its design rim, the amount of distortion only being modified by the thickness of the rubber in the various portions of the sidewall. Accordingly, there is no pivot point in sidewall 42 which helps to distinguish or isolate the movement of the tread from the movement of the rest of the tire.

In the tire of the invention, the design of the lower sidewall substructures results in (a) an internally convex carcass profile with a high point of contraflexure, (b) an apex that is stiff, as defined by its elastic modulus of 4760 Npscm to 6460 Npscm (7000 psi to 9500 psi), and extends above the carcass's point of contraflexure, (c) a turn-up ply that extends above the apex and touches the carcass ply, and a chipper compound defining an outer profile of the bead area of the tire, which together will provide the desired tire deformations first upon inflation and then upon footprint loading.

The invention is further illustrated with reference to the following examples.

### Example 1

In order to evaluate the new concept tire, finite element analyses (FEA) were conducted to compare the new tire to a selected, well-performing control tire. The strain energy densities (SED) in the tire were compared since the SED reflects the combined values of the three normal stresses, three shear stresses, and their strains. Tables 1 and 2 show the computed results for the control and the new concept tires.

A production tire, size P185/70R14, was used as a control, for comparison with the properties of the same size experimental tire, made using the method of the invention. The stresses, strains, and rolling resistance contributions of various components of the tire were calculated.

The control tire and the experimental tire were set up with the same cord angles, the same green ends per centimeter (e.p.c.) (ends per inch (e.p.i.)), and the same materials. Table 1 also shows that the experimental tire showed less deflection than the control tire.

**Table 1**

| **Computed Tire Response for 2.04 kg/sqcm(29 psi) Inflation Pressure and 363.6 kg (800 Ibs) Load:** | | |
|---|---|---|
| | **Control** | **Experimental** |
| Belt (cured) Cord Angle | 21 | 21 |
| Belt (green) epc (epi) | 7.9 (20) | 7.9 (20) |
| Carcass (green) epc (epi) | 11 (28) | 11 (28) |
| Crown Deflection | 1.06 | 0.81 |
| Deflection as % of Section Height | 21 % | 15 % |

Table 2 shows the strain energy density of the two tires at the middle of the footprint, as calculated using FEA. From Table 2, and a comparison of Fig 3a with Fig. 5, where the shaded areas represent the highest strain in the tire, it can be seen that the experimental tire has lower strain energy density at the belt edges, the shoulders, the upper sidewall, the mid-sidewall, and lower sidewall than the control tire. Since strain energy can cause belt edge separations, this data shows that the tire of the invention should have more durability at the belt edge. Likewise, the lower strain energy in the lower sidewall shows that the tire of the invention will remain better seated on the rim than the control tire. Also, since there is lower strain energy in the lower sidewall, and less deflection, rolling resistance of the experimental tire should be improved because there is less energy loss associated with the flexing of the lower sidewall.

**Table 2**

| **Strain Energy Density in a Section at Middle of Footprint** | | |
|---|---|---|
| | **Control** | **Experimental** |
| Belt Edges | 16.5 | 6.0 |
| Shoulders | 4.5 | 3.0 |
| Upper Sidewalls | 7.5 | 3.0 |
| Mid Sidewalls | 10.5 | 1.5 |
| Lower Sidewalls | 22.5 | 4.5 |

Using FEA, the specific contribution of key tire elements to the rolling resistance of the tire can be calculated. It is conventional in the tire industry to assess changes in each element's energy loss by changing the compound ingredients. A new method of analyzing energy loss in a tire is addressed in the present invention by comparing the role of different structural elements in a different tire, where the structural elements of interest are mainly the tread cap, the sidewall and the chafer. The redistribution of strain in the experimental tire can alter the rolling resistance of the tire, based on the relative contribution to rolling resistance of the key tire elements. The computed results are illustrated in Table 3.

**Table 3**

| **Rolling Resistance - % Contributions:** | | |
|---|---|---|
| | **Control** | **Experimental** |
| Sidewall | 15.97 | 25.00 |
| Tread Cap | 45.05 | 14.31 |
| Chafer | 11.51 | 19.54 |
| Liner | 8.15 | 8.17 |
| Apex | 0.00 | 8.59 |
| Belts+Carcass Coats | 6.72 | 8.27 |
| Gum Strip | 1.64 | 8.36 |
| Tread Base | 4.35 | 4.00 |
| Toeguard | 4.67 | 2.43 |
| Mini Skirt | 1.75 | 1.23 |
| Bead Insulation | 0.19 | 0.09 |

### Example 2

Twelve control tires and twelve tires of the invention were built and tested for rolling resistance using the standard rolling resistance tests. The tires were constructed using the same materials, and differed only in that: the apex in the experimental tires was 6.35 cm (2 inches) high, and was absent in the control tire; the turn-up ply in the experimental tire extended 6.35 cm (2.5 inches) above the tire/rim interface, whereas the control tire had a turn-up of 1.78 cm (0.7 inch); a sidewall wedge in the experimental tire, in a portion below the first belt extended 5.79 cm (2.28 inches) as compared to a conventional wedge extending 1.22 cm (0.48 inch) in the control tire, and had a thickness below the edge of the first belt of 0.61 cm (0.24 inch) as compared to 0.13 cm (0.05 inch) in the control tire. The results are summarized in Table 4.

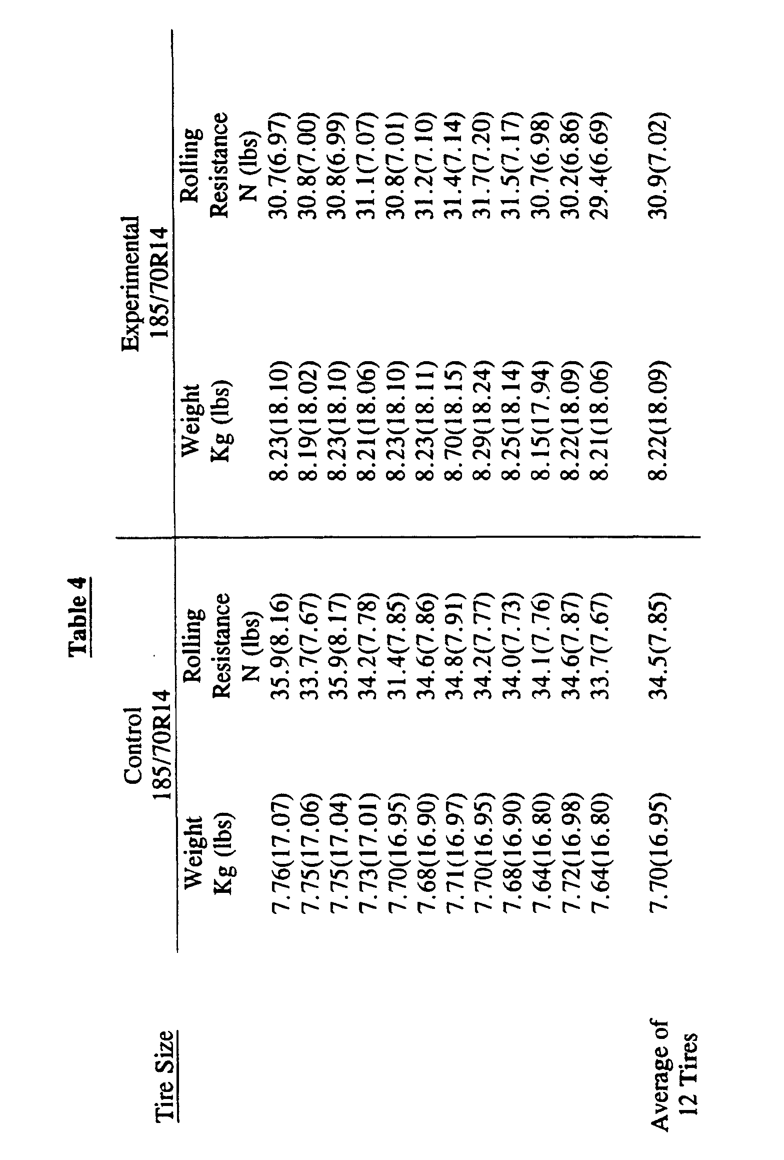

The data shows that the experimental tires of the invention, although they have a weight increase of about 6.72%, have a vastly improved rolling resistance, about 10.64% better as compared to the control tires.

### Example 3

Eight tires of each construction illustrated in Example 2 were tested for durability using the standard Fatigue Capacity test (FatCap). The results, summarized in Table 8, indicate a 22% improvement in durability of the experimental tire.

**Table 8**

| Fatigue Capacity Test | Control | Experimental |
|---|---|---|
| | 185/70R14 | 185/70R14 |
| T&RA Rated Load at 23.8 Npscm, 545.9 Kg (35 psi, 1201 lbs) | | |
| Fatigue Capacity | 1397.7 | 1701.6 |

While the invention has been specifically illustrated and described, those skilled in the art will recognize that the invention may be variously modified and practiced . The invention is limited only by the scope of the following claims.

## Claims

1. A pneumatic tire comprising a pair of substantially annular beads (12), at least one carcass ply (16) wrapped around said beads, a tread (22) disposed over said carcass ply in a crown area of said tire, a belt reinforcement with at least two steel belts (20) interposed between said tread and said carcass ply, and sidewalls (18) disposed between said tread (22) and said beads (12) , said tire (10) having a lower sidewall region (18b) which is integrally connected with the bead area (12a) of said tire and is stiffened such that the beads (12) and lower sidewalls (18b) pivot substantially in unison with respect to a rim (14) on which the tire may be mounted, said lower sidewall (18b) comprising an apex (17) placed between said carcass ply (16) and a turn up (16a) in the bead area (12a) and being connected to a mid-sidewall (18c) having less stiffness than said lower sidewall, an upper sidewall (18a) having a geometry and a low flexural stiffness such that it acts like a flexible coil connected to said mid-sidewall (18c) and providing a non-coupling bridge between the tread (22) at the crown of the tire and the mid-sidewall (18c), **characterized in that** said belt reinforcement has a lateral stiffness equivalent to a belt reinforcement having two steel belts (20) wherein each belt (20) has 7.9 to 9.4 ends per centimeter (20 to 24 ends per inch ) steel cord reinforcement having a diameter of 0.042 cm at an angle of 21°, said apex having a length of 25% to 45% of the section height (SH) of the tire and a modulus of 4760 to 6160 Npscm (7000 to 9500 psi), the tire further comprises a wedge (21) having a modulus of 396 to 594 Npscm being an integral part of said upper sidewall (18a) and said tread (22) with a portion contiguous with said belts (20) having a length comprising 37% to 43% of the tread width.

2. The tire of claim 1 wherein said tread (22) is flat with respect to a surface on which said tire (10) may be in contact.

3. The tire of claim 1 wherein said belts (20) interposed between said carcass (16) and said tread (22) in the crown area of said tire (10) are **characterized in that** said belts (20) are anchored in the shoulder region of said tire, thereby providing hinged support for said tread and a decoupling of the tread (22) from the upper sidewall (18a), said shoulder being defined as the intersection of the ply line radius and the tread radius.

4. The tire of claim 1 wherein the shoulder (26), 50% of the section height (SH) and the bead (12) define points on a reference circle (30), and the shoulder radius Rₛ of said tire is smaller than the radius Rr of said reference circle (30).

5. The tire of claim 4 wherein the shoulder radius Rₛ of said tire is 50% to 60% of the radius Rr of said reference circle (30).

6. The tire of claim 1 wherein said lower sidewalls (18b) have a concave profile.

7. The tire of claim 1 wherein the molded base width is 20 to 25% wider than the specification rim width for said tire.

8. The tire of claim 1 wherein turn-up ply endings extend at least to 35% of the section height of the tire.

9. The tire of claim 1 wherein the apex (17) extends at least 20% of the section height of the tire.

10. A method for constructing a pneumatic tire according to claim 1 comprising the steps of
(a) building the tread (22) independently of the rest of the tire (10) wherein the tread is made to be linear across its width;
(b) wrapping the at least one carcass ply (16) around a pair of parallel annular beads (12) wherein a turnup (16a) of at least one carcass ply (16) extends at least 40% but not more than 65% of the section height (SH) of the tire;
(c) preparing the belt reinforcement having substantial lateral stiffness for said tire to have a lateral stiffness equivalent to a belt reinforcement having two steel belts (20) wherein each belt (20) has 7.9 to 9.4 ends per centimeter (20 to 24 ends per inch) steel cord reinforcement having a diameter of 0.042 cm at an angle of 21°;
(d) applying said belt reinforcement to the crown area of said carcass ply (16);
(e) disposing the wedge (21) between the edges of said belt reinforcement and the curvature of the carcass (16) in the shoulder area (26) of the tire, wherein the wedge (21) has a length comprising 37% to 43% of the tread width and a height sufficient to maintain the lateral linearity of the tread;
(f) preparing the apex (17) for said tire having a length of 25% to 45% of the section height (SH) of the tire and a modulus of 4760 to 6160 Npscm (7000 to 9500 psi), and applying said apex (17) next to the bead (12) while constructing said tire (10)
(g) preparing said wedge (21) as an integral part of the upper sidewall (18a) wherein a portion of said wedge (21) contiguous with said belts (20) has a length of 37% to 43% of the tread width, and preparing the wedge (21) to have a modulus of 396 to 594 Npscm (600 to 900 psi).

11. The method of claim 10 comprising the further step curing a green tire having a mold shape wherein the distance between the beads (12) in a curing mold is 110% to 175% times the distance between the bead seats on the specified rim (14) for said tire.

## Patentansprüche

1. Luftreifen mit zwei im Wesentlichen ringförmigen Wülsten (12), mindestens einer Karkasslage (16), die um die Wülste herumgewickelt ist, einem Laufstreifen (22), der über der Karkasslage in einem Kronenbereich des Reifens angeordnet ist, einer Gürtelverstärkung mit mindestens zwei Stahlgürteln (20), die zwischen dem Laufstreifen und der Karkasslage angeordnet ist, und Seitenwänden (18), die zwischen dem Laufstreifen (22) und den Wülsten (12) angeordnet sind, wobei der Reifen (10) einen unteren Seitenwandbereich (18b), der einstückig mit dem Wulstbereich (12a) des Reifens verbunden ist und derart versteift ist, dass sich die Wülste (12) und die unteren Seitenwände (18b) im Wesentlichen gemeinsam in Bezug auf eine Felge (14), auf die der Reifen aufgezogen sein kann, drehen, wobei die untere Seitenwand (18b) einen Kernreiter (17) umfasst, der zwischen der Karkasslage (16) und einem Umschlag (16a) in dem Wulstbereich (12a) platziert ist, und mit einer mittleren Seitenwand (18c) verbunden ist, die eine geringere Steifigkeit als die untere Seitenwand aufweist, eine obere Seitenwand (18a) eine solche Geometrie und eine solche niedrige Biegesteifigkeit aufweist, dass sie wie eine flexible Wendel wirkt, die mit der mittleren Seitenwand (18c) verbunden ist und eine nicht koppelnde Brücke zwischen dem Laufstreifen (22) an der Krone des Reifens und der mittleren Seitenwand (18c) bereitstellt, **dadurch gekennzeichnet, dass** die Gürtelverstärkung eine laterale Steifigkeit aufweist, die einer Gürtelverstärkung mit zwei Stahlgürteln (20) äquivalent ist, wobei jeder Gürtel (20) eine Stahlkordverstärkung mit 7,9 bis 9,4 Enden pro Zentimeter (20 bis 24 Enden pro Zoll) mit einem Durchmesser von 0,042 cm bei einem Winkel von 21° aufweist, wobei der Kemreiter eine Länge von 25 % bis 45 % der Querschnittshöhe (SH) des Reifens und einen Modul von 4760 bis 6160 N/cm² (7000 bis 9500 psi) aufweist, wobei der Reifen ferner einen Keil (21) umfasst, der einen Modul von 396 bis 594 N/cm² aufweist und ein integraler Teil der oberen Seitenwand (18a) und des Laufstreifens (22) ist, wobei ein Abschnitt, der an die Gürtel (20) angrenzt, eine Länge aufweist, die 37 % bis 43 % der Laufstreifenbreite umfasst.

2. Reifen nach Anspruch 1, wobei der Laufstreifen (22) in Bezug auf eine Fläche, mit der der Reifen (10) in Kontakt stehen kann, flach ist.

3. Reifen nach Anspruch 1, wobei die Gürtel (20), die zwischen der Karkasse (16) und dem Laufstreifen (22) im Kronenbereich des Reifens (10) angeordnet sind, **dadurch gekennzeichnet sind, dass** die Gürtel (20) im Schulterbereich des Reifens verankert sind, wodurch eine angelenkte Unterstützung für den Laufstreifen und eine Entkopplung des Laufstreifens (22) von der oberen Seitenwand (18a) bereitgestellt ist, wobei die Schulter als die Schnittstelle des Lagenlinienradius und des Laufstreifenradius definiert ist.

4. Reifen nach Anspruch 1, wobei die Schulter (26), 50 % der Querschnittshöhe (SH) und der Wulst (12) Punkte auf einem Bezugskreis (30) definieren, und der Schulterradius Rₛ des Reifens kleiner als der Radius Rᵣ des Bezugskreises (30) ist.

5. Reifen nach Anspruch 4, wobei der Schulterradius Rₛ des Reifens 50 % bis 60 % des Radius Rᵣ des Bezugskreises (30) beträgt.

6. Reifen nach Anspruch 1, wobei die unteren Seitenwände (18b) ein konkaves Profil aufweisen.

7. Reifen nach Anspruch 1, wobei die Basisbreite im geformten Zustand 20 bis 25 % breiter als die Spezifikations-Felgenbreite für den Reifen ist.

8. Reifen nach Anspruch 1, wobei die Enden der Umschlaglage sich mindestens bis zu 35 % der Querschnittshöhe des Reifens erstrecken.

9. Reifen nach Anspruch 1, wobei sich der Kernreiter (17) mindestens auf 20 % der Querschnittshöhe des Reifens erstreckt.

10. Verfahren zum Aufbauen eines Luftreifens nach Anspruch 1 mit den Schritten:
(a) Aufbauen des Laufstreifens (22) unabhängig vom Rest des Reifens (10), wobei der Laufstreifen derart hergestellt wird, dass er über seine Breite hinweg geradlinig ist;
(b) Wickeln der mindestens einen Karkasslage (16) um zwei parallele ringförmige Wülste (12), wobei ein Umschlag (16a) von mindestens einer Karkasslage (16) sich mindestens 40 %, aber nicht mehr als 65 %, der Querschnittshöhe (SH) des Reifens erstreckt;
(c) Vorbereiten der Gürtelverstärkung mit im Wesentlichen einer lateralen Steifigkeit für den Reifen, so dass sie eine laterale Steifigkeit aufweist, die einer Gürtelverstärkung mit zwei Stahlgürteln (20) äquivalent ist, wobei jeder Gürtel (20) eine Stahlkordverstärkung mit 7,9 bis 9,4 Enden pro Zentimeter (20 bis 24) Enden pro Zoll) und einem Durchmesser von 0,042 cm bei einem Winkel von 21° aufweist;
(d) Auflegen der Gürtelverstärkung auf den Kronenbereich der Karkasslage (16);
(e) Anordnen des Keils (21) zwischen den Kanten der Gürtelverstärkung und der Krümmung der Karkasse (16) im Schulterbereich (26) des Reifens, wobei der Keil (21) eine Länge aufweist, die 37 % bis 43 % der Laufstreifenbreite umfasst, und eine Höhe, die ausreicht, um die laterale Geradlinigkeit des Laufstreifens aufrechtzuerhalten;
(f) Vorbereiten des Kernreiters (17) für den Reifen mit einer Länge von 25 % bis 45 % der Querschnittshöhe (SH) des Reifens und einem Modul von 4760 bis 6160 N/cm² (7000 bis 9500 psi) und Auflegen des Kernreiters (17) neben dem Wulst (12), während der Reifen (10) aufgebaut wird;
(g) Vorbereiten des Keils (21) als ein integraler Teil der oberen Seitenwand (18a), wobei ein Abschnitt des Keils (21), der an die Gürtel (20) angrenzt, eine Länge von 37 % bis 43 % der Laufstreifenbreite aufweist, und Vorbereiten des Keils (21), so dass er einen Modul von 396 bis 594 N/cm² (600 bis 900 psi) aufweist.

11. Verfahren nach Anspruch 10, das den weiteren Schritt umfasst:
Vulkanisieren eines Rohreifens mit einer in einer Vulkanisationsform gebildeten Form, wobei der Abstand zwischen den Wülsten (12) in einer Vulkanisierform das 110 % bis 175 %-fache des Abstandes zwischen den Wulstsitzen auf der spezifizierten Felge (14) für den Reifen beträgt.

## Revendications

1. Bandage pneumatique comprenant une paire de talons essentiellement annulaires (12), au moins une nappe de carcasse (16) entourant lesdits talons, une bande de roulement (22) disposée par-dessus ladite nappe de carcasse dans une zone de couronne dudit bandage pneumatique, des ceintures de renforcement comprenant au moins deux ceintures en acier (20) intercalées entre ladite bande de roulement et ladite nappe de carcasse, et des flancs (18) disposés entre ladite bande de roulement (22) et lesdits talons (12), ledit bandage pneumatique (10) possédant une région de flanc inférieur (18b) qui est reliée de manière solidaire à la zone de talon (12a) dudit bandage pneumatique et qui est rigidifiée de telle sorte que le talon (12) et le flanc inférieur (18b) pivotent essentiellement à l'unisson par rapport à une jante (14) sur laquelle le bandage pneumatique peut être monté, ledit flanc inférieur (18b) comprenant un bourrage sur tringle (17) placé entre ladite nappe de carcasse (16) et un retournement vers le haut (16a) dans la zone de talon (12a) et relié à un flanc médian (18c) dont la rigidité est inférieure à celle dudit flanc inférieur, un flanc supérieur (18a), dont la géométrie et la faible rigidité en flexion sont telles qu'il agit à la manière d'une spirale flexible reliée audit flanc médian (18c) procurant un pont exempt de couplage entre la bande de roulement (22) dans la zone de couronne du bandage pneumatique et le flanc médian (18c), **caractérisé en ce que** ladite ceinture faisant office de renforcement possède une rigidité latérale équivalente à celle d'un renforcement à base de ceintures possédant deux ceintures en acier (20), dans lequel chaque ceinture (20) possède de 7,9 à 9,4 bouts par centimètre (de 20 à 24 bouts par pouce) des câblés en acier faisant office de renforcement et possédant un diamètre de 0,042 cm en formant un angle de 21 degrés, ledit bourrage sur tringle possédant une longueur représentant de 25 % à 45 % de la hauteur de section (SH) du bandage pneumatique et un module de 4760 à 6160 Npscm (de 7000 à 9500 psi), le bandage pneumatique comprenant en outre un coin (21) possédant un module de 396 à 594 Npscm, qui fait partie intégrante dudit flanc supérieur (18a) et de ladite bande de roulement (22), une portion contiguë auxdites ceintures (20) possédant une longueur qui représente de 37 % à 43 % de la largeur de la bande de roulement.

2. Bandage pneumatique selon la revendication 1, dans lequel ladite bande de roulement est plate par rapport à une surface avec laquelle ledit bandage pneumatique (10) est à même d'entrer en contact.

3. Bandage pneumatique selon la revendication 1, dans lequel lesdites ceintures (20) intercalées entre ladite carcasse (16) et ladite bande de roulement (22) dans la zone de couronne dudit bandage pneumatique (10) sont **caractérisées en ce que** lesdites ceintures (20) sont ancrées dans la région d'épaulement dudit bandage pneumatique, en procurant ainsi un support articulé à ladite bande de roulement et un découplage de la bande de roulement (22) par rapport au flanc supérieur (18a), ledit épaulement étant défini comme étant l'intersection entre le rayon du profil de nappe et le rayon de la bande de roulement.

4. Bandage pneumatique selon la revendication 1, dans lequel l'épaulement (26), 50 % de la hauteur de section (SH) et le talon (12) définissent des points sur un cercle de référence (30), et le rayon d'épaulement Rs dudit bandage pneumatique est inférieur au rayon Rr dudit cercle de référence (30).

5. Bandage pneumatique selon la revendication 4, dans lequel le rayon d'épaulement Rs dudit bandage pneumatique représente de 50 % à 60 % du rayon Rr dudit cercle de référence (30).

6. Bandage pneumatique selon la revendication 1, dans lequel ledit flanc inférieur (18b) possède un profil concave.

7. Bandage pneumatique selon la revendication 1, dans lequel la largeur de base à l'état moulé est supérieure à concurrence de 20 à 25 % à la largeur de jante spécifiée pour ledit bandage pneumatique.

8. Bandage pneumatique selon la revendication 1, dans lequel les extrémités de la nappe de retournement vers le haut s'étendent sur une distancé qui représente au moins 35 % de la hauteur de section du bandage pneumatique.

9. Bandage pneumatique selon la revendication 1, dans lequel le bourrage sur tringle (17) s'étend sur une distance correspondant au moins à 20 % de la hauteur de section du bandage pneumatique.

10. Procédé pour construire un bandage pneumatique selon la revendication 1, comprenant les étapes consistant à
(a) confectionner la bande de roulement (22) indépendamment du reste du bandage pneumatique (10), la bande de roulement étant réalisée pour être linéaire sur sa largeur ;
(b) envelopper à l'aide de ladite ou desdites nappes de carcasse (16) une paire de talons annulaires parallèles (12), un retournement vers le haut (16a) d'au moins une nappe de carcasse (16) s'étendant sur une distance représentant au moins 40 %, mais pas plus de 65 %, de la hauteur de section (SH) du bandage pneumatique ;
(c) préparer la ceinture faisant office de renforcement qui possède une rigidité latérale substantielle pour conférer audit bandage pneumatique une rigidité latérale équivalente à celle d'une ceinture faisant office de renforcement, possédant deux ceintures en acier (20), chaque ceinture 20 possédant de 7,9 à 9,4 bouts par centimètre (de 20 à 24 bouts par pouce) de câblés en acier faisant office de renforcement et possédant un diamètre de 0,042 cm en formant un angle de 21 degrés ;
(d) appliquer ladite ceinture à titre de renforcement sur la zone de couronne de ladite nappe de carcasse (16) ;
(e) disposer le coin (21) entre les bords de ladite ceinture à titre de renforcement et la courbure de la carcasse (16) dans la zone d'épaulement (26) du bandage pneumatique, le coin (21) possédant une longueur représentant de 37 % à 43 % de la largeur de bande de roulement et une hauteur suffisante pour maintenir la linéarité latérale de la bande de roulement ;
(f) préparer le bourrage sur tringle (17) pour ledit bandage pneumatique dont la longueur représente de 25 % à 45 % de la hauteur de section (SH) du bandage pneumatique et un module de 4760 à 6160 Npscm (de 7000 à 9500 psi), et appliquer ledit bourrage sur tringle (17) à côté du talon (12) lors de la construction dudit bandage pneumatique (10) ;
(g) préparer ledit coin (21) pour qu'il représente une partie intégrale du flanc supérieur (18a), une portion dudit coin (21) contiguë auxdites ceintures (20) possédant une longueur qui représente de 37 % à 43 % de la largeur de bande de roulement, et préparer le coin (21) pour qu'il possède un module de 396 à 594 Npscm (de 600 à 900 psi).

11. Procédé selon la revendication 10, comprenant l'étape supplémentaire consistant à vulcaniser un bandage pneumatique à l'état cru possédant une forme moulée, dans lequel la distance entre le talon (12) dans un moule de vulcanisation représente de 110 % à 175 % la distance entre les portées de talon sur la jante spécifiée (14) pour ledit bandage pneumatique.
